**Europäisches Patentamt**

**European Patent Office**

**Office européen des brevets**

(19)

(11) Veröffentlichungsnummer: **0 079 073**
**B1**

# (12) EUROPÄISCHE PATENTSCHRIFT

(45) Veröffentlichungstag der Patentschrift:
**12.04.89**

(21) Anmeldenummer: **82110286.0**

(22) Anmeldetag: **08.11.82**

(51) Int. Cl.⁴: **G 02 B 6/44**

(54) **Kabel und Verfahren zu seiner Herstellung.**

(30) Priorität: **11.11.81 DE 3144851**

(43) Veröffentlichungstag der Anmeldung:
**18.05.83 Patentblatt 83/20**

(45) Bekanntmachung des Hinweises auf die Patenterteilung:
**12.04.89 Patentblatt 89/15**

(84) Benannte Vertragsstaaten:
**AT BE CH DE FR GB IT LI NL SE**

(56) Entgegenhaltungen:
**DE-A- 2 355 854**
**DE-A- 2 546 737**
**DE-A- 3 009 406**
**FR-A- 2 468 135**

(73) Patentinhaber: **Siemens Aktiengesellschaft Berlin und München, Wittelsbacherplatz 2, D-8000 München 2 (DE)**

(72) Erfinder: **Oestreich, Ulrich, Dipl.-Ing., Karl-Witthalm-Strasse 15, D-8000 München 70 (DE)**

## Beschreibung

Die Erfindung bezieht sich auf ein Kabel, insbesondere Lichtwellenleiterkabel, bei dem die Kabelseele Einzeladern enthält, eine der Zugentlastung dienende Bespinnung vorgesehen und außen ein mechanisch mit der Bespinnung verbundener Mantel aufgebracht ist.

Ein Kabel dieser Art ist aus der FR-A-2 468 135 bekannt. Bei diesem Stand der Technik ist zwingend immer ein Rohr vorgesehen, in dessen Innerem die Lichtleitfaser angeordnet ist. Auf dieses Rohr wird die Bespinnung aufgebracht und dann wird entsprechend allen Ausführungsbeispielen stets folgendermaßen verfahren:

Es wird durch Anlösen des Rohrmaterials (Variante 1), durch Tränken der Bespinnung mit einer Dispersion aus dem Material des Rohrs (Variante 2) oder durch Einsatz eines Klebemittels, welches mit dem Rohrmaterial kompatibel ist (Variante 3) eine Tränkung der Bespinnung durchgeführt. Anschließend wird bei allen drei Varianten, sei es durch Absaugen des Lösungsmittels oder durch Trocknung des Klebstoffs eine durchgehend feste Verbindung zwischen dem Rohr und der in der vorstehenden Weise beschriebenen getränkten Bespinnung herbeigeführt. Auf das so getrocknete und ausgehärtete Verbundmaterial, bestehend aus dem Rohr und der Bespinnung, wird der Außenmantel aufgebracht.

Die bekannte Konstruktion geht also von der Vorstellung aus, daß eine aus einem Rohr mit fest aufgebackener Bespinnung bestehende Zweischichtenlage vorgesehen ist, auf welche dann der Außenmantel aufgebracht wird, so daß insgesamt ein festes, mindestens dreischichtiges Gebilde als Mantelkonstruktion entsteht.

Der erste Nachteil einer solchen Konstruktion besteht darin, daß das Rohr nur durch einen Extrusionsprozeß sinnvoller Weise um die Lichtleitfaser herum aufgebracht werden kann. Dies schafft Probleme insoweit, als verhindert werden muß, daß die Lichtleitfaser mit dem beim Extrudieren noch heißen Material des Rohres in Kontakt kommt, was z.B. zu einem Festkleben und damit einer Schädigung führen könnte.

Ein weiterer Nachteil bezüglich der Aufbringung des Rohres besteht darin, daß dieses Rohr den Gesamtdurchmesser der Kabelkonstruktion in unnötiger Weise mit vergrößert. Sehr geringe Wandstärken können hierbei nicht verwendet werden, da das Rohr ja so fest ausgebildet sein muß, daß es die nachfolgend aufgebrachte Bespinnung tragen und zudem (im Fall der Verwendung von Lösungsmitteln) auch einen Teil seines Materials zur Tränkung der Bespinnung abgeben kann.

Ein weiterer erheblicher Nachteil des Einsatzes eines Rohres 3 im Inneren der Kabelseele besteht darin, daß durch die mindestens dreischichtige Umhüllung (3, 4, 5) die Gesamtkonstruktion sehr steif wird. Deshalb kann es bei Biegevorgängen zu einem Einknicken des Rohres kommen, was ebenfalls die Gefahr einer Schädigung empfindlicher Aderelemente mit sich bringt.

Bei dem aus der DE-A-3 009 406 bekannten optischen Kabel sind Schnüre vorgesehen, die aus miteinander verklebten Glasfasern bestehen. Diese Schnüre werden in einem eigenen Arbeitsgang vor der Herstellung des Kabels dadurch gefertigt, daß die die Schnüre bildenden Garne durch einen Behälter gezogen und anschließend in einer eine entsprechende Luftfeuchtigkeit aufweisenden Umgebungsluft ausgehärtet und schließlich aufgespult werden. Die Zugentlastung wird also mittels in einem eigenen Arbeitsprozeß behandelter, als selbständige Bauteile hergestellter Schnüre vorgenommen, die bei der eigentlichen Kabelfertigung lediglich noch mit in die Kabelseele oder den Kabelmantel einlaufen. Bei dem Lichtleitkabel nach der DE-A-2 546 737 ist vorgesehen, daß auf einen niedrigviskosen Mantel eine zweite Lage aus eine zähplastischen Gummi oder einer Kunststoffschicht aufgespritzt wird, die durch Ausvulkanisation mit der inneren Lage verbunden ist. Die Aufvulkanisation stellt einen komplizierten und aufwendigen zusätzlichen Prozeß dar, der nur unter bestimmten Ausgangs- und Arbeitsbedingungen durchgeführt werden kann.

Aus der DE-OS 2 818 297 ist ein elektrisches Kabel bekannt, bei dem zugfeste Elemente auf einer Trägerfolie angeordnet sind, die auf der eigentlichen Kabelseele aufliegen. Zwischen dem außen aufgebrachten Kunststoffmantel und den zugfesten Elementen wird in regelmäßigen Abständen eine stoffschlüssige Verbindung hergestellt, wozu zwischen den zugfesten Elementen und dem Mantel eine mit Aussparungen versehene weitere Folie vorgesehen ist. Bei der Extrusion des Kunststoffmantels dringt dessen Material durch diese Aussparungen hindurch bis zu den zugfesten Elementen vor und stellt dadurch eine stoffschlüssige Verbindung her.

Der vorliegenden Erfindung, welche sich auf ein Kabel der eingangs genannten Art bezieht, liegt die Aufgabe zugrunde, einen Kabelaufbau zu schaffen, der in einfacher Weise herstellbar ist und dessen Konstruktion es gestattet, eine unerwünscht große Überdehnung des Mantels beim Einziehvorgang gegenüber der Seele zu vermeiden. Gemäß der Erfindung wird dies dadurch erreicht, daß die Bespinnung direkt auf die Einzeladern aufgebracht ist und daß die Bespinnung an ihrer Außenseite mit einer Schicht aus Schmelzkleber versehen ist, durch die eine Verbindung zwischen der Bespinnung und der Innenseite des im Schlauchreckverfahren aufgebrachten Mantels hergestellt ist.

Da über den Schmelzkleber zwischen dem im Schlauchreckverfahren (d.h. heiß vom Extruder) kommenden Mantel einerseits und der zugfesten, auf der Kabelseele aufgebrachten Bespinnung andererseits eine relativ festhaftende Verbindung hergestellt wird, kann sich beim Einziehvorgang der Mantel gegenüber der Kabelseele und der dortigen zugfesten Bespinnung praktisch nicht bewegen. Somit tritt auch im Endbereich des Kabels keine unerwünschte große Längung des Mantels auf und es ist auch vermieden, daß nach dem Einziehvorgang ein Rückschrumpfen des Mantels mit den dabei möglichen Schädigungen oder Beeinträchtigungen der Kabelseele eintreten kann. Gleichzeitig ist sichergestellt, daß zwischen dem Mantel und der Kabelseele kein Ringspalt auftritt, so daß die Längsdichtigkeit verbessert werden kann.

Das erfindungsgemäße Kabel ermöglicht es, bei der Fertigung ohne zusätzlichen Aufwand die gewünschte Verbindung zwischen der Bespinnung einerseits und dem Klebematerial andererseits herzustellen. Der als Klebematerial verwendete Schmelzkleber läßt sich in einfacher Weise auf die Bespinnung aufbringen. Während bei den bekannten Verfahren entsprechend mindestens ein komplizierter zusätzlicher Schritt (z.B. Einbringung des Lösungsmittels mit entsprechendem Zeitaufwand für das Anlösen des benachbarten Rohrmaterials, eine Ausvulkanisation oder das Verdunsten des Lösungsmittels für den Dispersionskleber) erforderlich ist, wird bei der Erfindung ohne zusätzliche Mittel und ohne zusätzlichen Zeitaufwand die gewünschte Verbindung zwischen dem Schmelzkleber und der Innenwand des Kabelmantels dadurch hergestellt, daß letzterer im Schlauchreckverfahren aufgebracht wird. Das noch reckfähige und damit heiße und weiche Mantelmaterial am Ausgang des Extruders ist ausreichend warm, um das Schmelzen des Schmelzklebers auf der Außenseite der Bespinnung zu bewirken, so daß beim Schlauchreckvorgang nicht nur die notwendige Durchmesserverringerung des Mantels auf den gewünschten Durchmesserwert erzielt wird sondern gleichzeitig der Schmelzvorgang des Schmelzklebers erfolgt, wobei dieser sich fest mit der Innenwand des Mantels verbindet. Dabei wird gleichzeitig auch eine Abdichtung des sonst immer vorhandenen Ringspaltes zwischen der Innenfläche des Mantels und der zur Kabelseele gehörenden Bespinnung bewirkt. Während z.B. beim Anlösen, bei der Ausvulkanisation oder beim Verdunsten des Lösungsmittels nur geringe Durchlaufgeschwindigkeiten realisierbar sind, wirkt bei der Erfindung eine erhöhte Durchlaufgeschwindigkeit sogar förderlich, weil, je schneller der Mantel im Schlauchreckverfahren auf die Bespinnung heruntergereckt wird, desto heißer das Mantelmaterial noch zur Verfügung steht und desto besser und inniger die Verbindung zwischen dem Schmelzkleber und der Innenfläche des Mantelmaterials erfolgt.

Die Erfindung betrifft weiterhin ein Verfahren zur Herstellung eines Kabels der oben beschriebenen Art, das dadurch gekennzeichnet ist, daß auf die direkt auf die Einzeladern (LW) der Kabelseele aufgebrachte Bespinnung eine Schicht eines Schmelzklebers aufgetragen und anschließend der Mantel im Schlauchreckverfahren aufgebracht wird.

Sonstige Weiterbildungen der Erfindung sind in den weiteren Unteransprüchen wiedergegeben.

Die Erfindung wird nachfolgend anhand von Zeichnungen näher erläutert. Es zeigen

Fig. 1 im Querschnitt den Aufbau eines Lichtwellenleiterkabels als Ausführungsbeispiel der Erfindung und

Fig. 2 eine Abwandlung des Kabelaufbaus mit zweifacher Beschichtung durch Schmelzkleber.

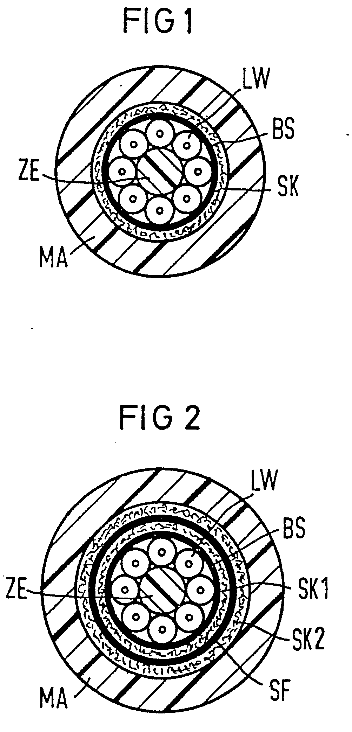

In Fig. 1 ist ein Lichtwellenleiterkabel dargestellt, bei dem im Inneren acht Lichtwellenleiter-Adern LW vorgesehen sind, die auf einem zugfesten zentralen Kern ZE aufgeseilt sind. Die einzelnen Lichtwellenleiter-Adern können als sogenannte Hohladern oder als gefüllte Adern ausgebildet sein. Zweckmäßig sind die verbleibenden Zwickel zwischen den Lichtwellenleiter-Adern LW und dem zugfesten Element ZE durch eine Füllmasse geschlossen, so daß das Kabel längswasserdicht wird. Auf der so durch das zugfeste Element ZE und die Lichtwellenleiter-Adern LW gebildeten Verseileinheit ist eine Bespinnung BS aufgebracht, die aus besonders zugfesten Fasern besteht. Hierfür können vorteilhaft Glasfaser-Garne bzw. Aramidgarne vorgesehen sein. Anstelle einer Bespinnung oder auch gegebenenfalls zusätzlich zu dieser kann auch eine Bewicklung mit zugfesten Bändern vorgesehen sein. Auf der Außenseite der Bespinnung BS ist als Klebemittel ein SK Schmelzkleber aufgebracht. Wenn die Verseileinheit durch die Füllmasse überfüllt ist, und die Füllmasse eine andere Konsistenz aufweist als der Schmelzkleber, dann ist es zweckmäßig, wenn vor dem Auftragen des Schmelzklebers durch ein hartes Abstreifen die Bespinnung BS für den Zutritt des Schmelzklebers freigelegt wird. Außen auf den Schmelzkleber wird ein Mantel MA aufgebracht und zwar im Schlauchreckverfahren. Dadurch ergibt sich eine feste Verbindung zwischen Schmelzkleber SK und der Mantelinnenseite sowie eine lose Haftung gegenüber der Kabelseele beziehungsweise zwischen dem Schmelzkleber SK und der Bespinnung, so daß Zugkräfte zum Beispiel beim Einziehen des Kabels nicht nur auf den Mantel MA wirken, sondern über den Schmelzkleber SK in starkem Maße auf die zugfeste Bespinnung BS übertragen werden. Dadurch werden bei den Einziehvorgängen sowohl die Kabelseele als auch der Kabelmantel von Zugkräften in gleicher Weise beansprucht und der Mantel MA streift sich nicht oder zumindest nur in einem sehr geringen Umfang von der Kabelseele ab. Durch diese enge Verbindung zwischen Mantel und Kabelseele wird es ermöglicht, daß ein Einziehen mittels eines Ziehstrumpfes oder mittels kraftschlüssiger Klemmen über dem Mantel möglich wird. Da ein Abziehen des Mantels nicht oder kaum mehr auftritt, kommt es auch zu keinen Rückschrumpf-Vorgängen, wodurch die vor allem bei Lichtwellenleiter-Kabeln unerwünschten Stauchvorgänge vermieden sind. Die Schicht aus Schmelzkleber SK führt gleichzeitig auch zu einer Abdichtung des Ringspaltes zwischen Mantel MA und Kabelseele.

Wenn zwischen der Füllmasse für die Kabelseele und dem Mantel MA gegebenenfalls unerwünschte Wechselwirkungen zu befürchten sind, dann kann ein Aufbau entsprechend Fig. 2 gewählt werden. Die Anordnung der Verseileinheit sowie die festaufgebrachte Bespinnung BS sind hier ebenso wie bei Fig. 1 getroffen. Auf eine erste Schicht eines Schmelzklebers SK1 erfolgt zunächst eine Sperrfolie SF, an deren Außenseite eine zweite Schicht des Schmelzklebers SK2 angebracht ist. Auf diese zweite Schmelzkleberschicht SK2 wird der Mantel MA durch Extrudieren und im Schlauchreckverfahren aufgebracht. Die Sperrfolie SF kann beispielsweise aus einem Polyester oder Polyamid bestehen, welches längseinlaufend bei der Kabelherstellung eingeführt wird und gegebenenfalls von einer Haltewendel zusammengehalten werden kann. Es ist aber auch möglich, eine entsprechend dünne Metallfolie, z.B. ein Aluminiumband vorzusehen, was insbesondere bei konventionellen Kabeln vorteilhaft ist. Die Sperrfolie SF braucht im Gegensatz zu bekannten Sperrfolien an keiner ihrer Seiten mit einem Schmelzkleber versehen zu sein, weil die Schmelzkleberschichten SK1 und SK2 die feste und sichere Halterung bewirken.

Es ist auch möglich, bei Verwendung entsprechend elastischer Schmelzkleber die gesamte Kabelseele vollständig mit Schmelzkleber zu füllen, wobei dann ein Abstreifvorgang im Bereich der Bespinnung oder Bewicklung nicht mehr erforderlich ist.

## Patentansprüche

1. Kabel, insbesondere Lichtwellenleiterkabel, bei dem die Kabelseele Einzeladern (LW) enthält, eine der Zugentlastung dienende Bespinnung (BS) vorgesehen und außen ein mechanisch mit der Bespinnung (BS) verbundener Mantel (MA) aufgebracht ist, dadurch gekennzeichnet, daß die Bespinnung (BS) direkt auf die Einzeladern (LW) aufgebracht ist und daß die Bespinnung (BS) an ihrer Außenseite mit einer Schicht aus Schmelzkleber (SK) versehen ist, durch die eine Verbindung zwischen der Bespinnung (BS) und der Innenseite des im Schlauchreckverfahren aufgebrachten Mantels (MA) hergestellt ist.

2. Kabel nach Anspruch 1, dadurch gekennzeichnet, daß die gesamte Kabelseele durch Schmelzkleber (SK) gefüllt ist.

3. Kabel nach Anspruch 1 oder 2, dadurch gekennzeichnet, daß bei gefüllten Kabeln durch Abstreifen der Füllmasse die Kabelseele für den Schmelzkleber (SK) freigelegt ist.

4. Kabel nach einem der vorhergehenden Ansprüche, dadurch gekennzeichnet, daß nach der Schicht aus Schmelzkleber (SK1) eine Folie (SF) vorgesehen ist und daß auf der Außenseite dieser Folie eine weitere Schicht aus Schmelzkleber (SK2) vorgesehen ist, welche die Verbindung zur Innenseite des Mantels (MA) herstellt.

5. Verfahren zur Herstellung eines Kabels nach einem der vorhergehenden Ansprüche, dadurch gekennzeichnet, daß auf die direkt auf die Einzeladern (LW) der Kabelseele aufgebrachte Bespinnung (BS) eine Schicht eines Schmelzklebers aufgetragen und anschließend der Mantel (MA) im Schlauchreckverfahren aufgebracht wird.

6. Verfahren nach Anspruch 5, dadurch gekennzeichnet, daß vor dem Auftragen des Schmelzklebers die bei der Kabelseele vorhandene Füllmasse hart abgestreift und dadurch die Bespinnung (BS) für den Zutritt des Schmelzklebers (SK) freigelegt wird.

## Claims

1. Cable, in particular optical-fibre cable, in which the cable core contains individual conductors (LW), a braiding (BS), serving for strain relief, is provided and on the outside a sheath (MA), mechanically connected to the braiding (BS), is applied, characterized in that the braiding (BS) is applied directly on the individual conductors (LW) and in that the braiding (BS) is provided on its outside with a layer of hot-melt adhesive (SK), by which a bond is established between the braiding (BS) and the inside of the sheath (MA) applied by the blown film stretching process.

2. Cable according to Claim 1, characterized in that the complete cable core is filled with hot-melt adhesive (SK).

3. Cable according to Claim 1 or 2, characterized in that, with filled cables, the cable core is exposed for the hot-melt adhesive (SK) by stripping of the filling compound.

4. Cable according to one of the preceding claims, characterized in that, after the layer of hot-melt adhesive (SK1), a film (SF) is provided and in that, on the outside of this film, a further layer of hot-melt adhesive (SK2) is provided, which establishes the bond with the inside of the sheath (MA).

5. Method of manufacturing a cable according to one of the preceding claims, characterized in that a layer of a hot-melt adhesive is applied to the braiding (BS), applied directly to the individual conductors (LW) of the cable core, and subsequently the sheath (MA) is applied by the blown film stretching process.

6. Method according to Claim 5, characterized in that, before the application of the hot-melt adhesive, the filling compound on the cable core is stripped in the hard state and consequently the braiding (BS) is exposed for access by the hot-melt adhesive (SK).

## Revendications

1. Câble, en particulier câble à fibres optiques, dont l'âme contient des conducteurs séparés (LW), dans lequel est prévu un guipage (BS) servant à la décharge de traction et sur lequel est appliquée extérieurement une gaine (MA) reliée mécaniquement au guipage (BS), caractérisé en ce que le guipage (BS) est appliqué directement sur les conducteurs (LW) et que le côté externe du guipage (BS) est pourvu d'une couche de colle à fusion (SK) qui établit une liaison entre le guipage (BS) et le côté interne de la gaine (MA), elle-même appliquée par un procédé d'étirage de tuyaux.

2. Câble selon la revendication 1, caractérisé en ce que toute l'âme du câble est remplie par une colle à fusion (SK).

3. Câble selon la revendication 1 ou 2, caractérisé en ce que, dans le cas de câbles remplis, l'âme du câble est exposée pour la colle à fusion (SK) par raclage de la masse de remplissage.

4. Câble selon une des revendications précédentes, caractérisé en ce que la couche de colle à fusion (SK1) est suivie par une feuille (SF) et qu'une couche supplémentaire de colle à fusion (SK2) est prévue sur le côté externe de cette feuille, couche supplémentaire qui établit la liaison avec le côté interne de la gaine (MA).

5. Procédé pour fabriquer un câble selon une des revendications précédentes, caractérisé en ce que l'on applique une couche de colle à fusion sur le guipage (BS), lui-même disposé directement sur les conducteurs (LW) de l'âme du câble, puis on applique la gaine (MA) selon un procédé d'étirage de tuyaux.

6. Procédé selon la revendication 5, caractérisé en ce que, avant l'application de la colle à fusion, on soumet la masse de remplissage, éventuellement présente sur l'âme du câble, à un raclage dur, en exposant ainsi le guipage (BS) pour l'accès de la colle à fusion (SK).

## FIG 1

LW
BS
ZE
SK
MA

## FIG 2

LW
BS
ZE
SK1
SK2
SF
MA